# EUROPÄISCHE PATENTANMELDUNG

(11) **EP 1 587 192 A1**
(43) Veröffentlichungstag der Anmeldung: **19.10.2005**
(21) Anmeldenummer: 05007217.2
(22) Anmeldetag: 01.04.2005
(51) Int. Cl.: H02B 1/32

(54) **Vorrichtung zum Einbau von Montageschienen in den Innenraum eines Schaltschrankes**

(30) Priorität: 18.04.2004 DE 102004020317
(71) Anmelder: Rittal GmbH & Co. KG, 35745 Herborn (DE)
(72) Erfinder: Besserer, Horst, 35745 Herborn (DE); Elm, Oskar, 35713 Eschenburg (DE); Schauwecker, Uwe, 35745 Herborn (DE)
(74) Vertreter: Fleck, Hermann-Joseph

(57) **Zusammenfassung**

Die Erifndung betrifft eine Vorrichtung zum Einbau von Montageschienen in den Innenraum eines Schaltschrankes, der mit vertikalen und horizontalen Seitenwänden bis auf die Frontseite verschlossen ist. Ist nach der Erfindung vorgesehen, dass die Montageschienen einen Montageschenkel, einen Abstandsschenkel und einen Befestigungsschenkel aufweisen, dass die Montageschenkel mit mindestens einer Längsreihe von Befestigungsaufnahmen versehen sind, dass die Befestigungsschenkel zwei im Befestigungsabstand eingebrachte Befestigungsbohrungen aufweisen, dass die Befestigungsschienen mit den Befestigungsschenkeln und den Befestigungsbohrungen an jeweils zwei im Befestigungsabstand auf der Innenseite der Seitenwände angebrachten Befestigungsschrauben mit den Seitenwänden verschraubt sind, und dass die Abstandsschenkel den Abstand der Montageschenkel zur Innenseite der Seitenwände festlegen, dann können auf einfache Weise Montageschienen auch in den Innenraum von Schaltschränken ohne teueres Rahmengestell eingebaut werden.

## Beschreibung

Die Erfindung betrifft eine Vorrichtung zum Einbau von Montageschienen in den Innenraum eines Schaltschrankes, der mit vertikalen und horizontalen Seitenwänden bis auf die Frontseite verschlossen ist.

Der Einbau von Montagescbienen in den Innenraum eines Schaltschrankes erfordert immer einen mehr oder weniger großen Teile- und Montageaufwand. Dies wird durch bekannte Schaltschrankaufbauten mit einem aus horizontalen und vertikalen Rahmenschenkeln zusammengesetzten Rahmengestell bestätigt, dessen offene Seiten mit Wandelementen und einer Schranktüre verschlossen sind. Dabei bilden die Rahmenschenkel an den offenen Rahmengestell-Seiten Rahmen, an denen die Montageschienen angebracht werden können. Die Montageschienen können zwischen den beiden vertikalen Rahmenschenkeln oder den beiden horizontalen Rahmenschenkeln eines derartigen Rahmens des Rahmengestelles angebracht werden. Das offene Feld eines Rahmens kann auch mit horizontalen und vertikalen Montageschienen unterteilt werden.

Diese Einbauart für die Montageschienen setzt jedoch stets einen teueren Schaltschrankaufbau mit Rahmengestell und Wandelementen sowie Schranktüre voraus.

Es hat nicht an Versuchen gefehlt, den Schaltschrankaufbau dadurch zu vereinfachen, dass kein Rahmengestell mehr erforderlich ist und die Seitenwände allein einen Schrankkorpus bilden.

Es ist Aufgabe der Erfindung, eine Vorrichtung der eingangs erwähnten Art zu schaffen, mit der Montageschienen einfacher Art auch in einen Schaltschrank ohne Rahmengestell mit wenig Teile- und Montageaufwand eingebaut werden können.

Diese Aufgabe wird nach der Erfindung dadurch gelöst, dass die Montageschienen einen Montageschenkel, einen Abstandsschenkel und einen Befestigungsschenkel aufweisen, dass die Montageschenkel mit mindestens einer Längsreihe von Befestigungsaufnahmen versehen sind, dass die Befestigungsschenkel zwei im Befestigungsabstand eingebrachte Befestigungsbohrungen aufweisen, dass die Befestigungsschienen mit den Befestigungsschenkeln und den Befestigungsbohrungen an jeweils zwei im Befestigungsabstand auf der Innenseite der Seitenwände angebrachten Befestigungsschrauben mit den Seitenwänden verschraubt sind, und dass die Abstandsschenkel den Abstand der Montageschenkel zur Innenseite der Seitenwände festlegen.

Die im Querschnitt Z-förmigen Montageschienen können als einfache Stanz-Biegeteile hergestellt und an den Innenseiten der Seitenwände des Schaltschrankes befestigt werden. Dabei bestimmen die an den Innenseiten der Seitenwände im Abstand der Befestigungsbohrungen im Befestigungsschenkel der Montageschiene den Ort und die Ausrichtung der Montageschiene. Der Abstandsschenkel der Montageschiene bestimmt den Abstand des Montageschenkels mit den Befestigungsaufnahmen von der Innenseite der Seitenwand. Dabei ist die Auswahl der Befestigungsstelle an horizontalen und vertikalen Seitenwänden in gleicher Weise möglich. Darüber hinaus kann die Ausrichtung der Montageschienen beliebig sein. In jedem Fall ist zum Einbau kein Rahmengestell mit teueren Rahmenschenkeln erforderlich.

Ist nach einer Ausgestaltung vorgesehen, dass die Längsreihen abwechselnd als Bohrungen und rechteckförmige Durchbrüche ausgebildete Befestigungsaufnahmen aufweisen, die in gleichmäßigem Rasterabstand angeordnet sind, dann können die Bohrungen für herkömmliche Schraubverbindungen und die Durchbrüche zum Einklipsen von Einklips-Muttern verwendet werden.

Der Z-förmige Querschnitt der Montageschiene ist vorzugsweise so ausgebildet, dass der Montageschenkel und der Befestigungsschenkel parallel zueinander ausgerichtet und mit einem senkrecht dazu stehenden Abstandsschenkel miteinander zur Montageschiene verbunden sind.

Für die Verschraubung der Montageschiene mit der Innenseite der Seitenwand ist nach einer Ausgestaltung vorgesehen, dass die Befestigungsbohrungen im Befestigungsschenkel der Montageschiene mit einer domartigen Ausprägung von der Befestigungsfläche des Befestigungsschenkels abgesetzt sind und dass eine auf das aus der Befestigungsbohrung ragende Ende der Befestigungsschraube aufgeschraubte Mutter als manuell verstellbare Flügelmutter ausgebildet ist und mit einer Abdeckung die Aussparung um die Befestigungsbohrung abdeckt.

Für die Herstellung der Verschraubung ist kein Werkzeug erforderlich und die mit Abdeckung versehene Flügelmutter deckt gleichzeitig die Befestigungsstelle ab. Vorzugsweise werden die Montageschienen horizontal und vertikal ausgerichtet an den Innenseiten der Seitenwände befestigt.

Die Anbringung der Befestigungsschrauben an den Innenseiten der Seitenwände wird dadurch erleichtert, dass die Befestigungsschrauben mit einem Flachkopf versehen sind, der an der Innenseite der Seitenwand angebracht ist. Der Flachkopf kann besser mit der Innenseite der Seitenwand verschweißt, verklebt und anderweitig verbunden werden, wobei die Seitenwand absolut dicht geschlossen bleibt.

Eine Art Verspannung der Schraubverbindung wird dadurch erreicht, dass zwischen der Ausprägung des Befestigungsschenkels und der Mutter auf der Befestigungsschraube eine Federscheibe angeordnet ist.

Der Schaltschrankaufbau wird dadurch vereinfacht, dass zwei horizontale Seitenwände und drei vertikale Seitenwände einen boxartigen Schrankkorpus bilden und dass die Seitenwände an der offenen Frontseite mit Abkantungen einen Frontrahmen zum Anlenken und Verschließen einer Schranktüre bilden. Dabei kann zur Anbringung der Schranktüre vorgesehen sein, dass die Schranktüre mittels Scharnier- und Schließelementen am Frontrahmen angebracht ist.

Die Erfindung wird anhand eines in den Zeichnungen dargestellten Ausführungsbeispiels näher erläutert. Es zeigen:
- Fig. 1: eine Teilperspektive eines Schaltschrank-Innenraumes, der von einem Schrankkorpus aus Seitenwänden gebildet ist mit anzubauenden Montageschienen,
- Fig. 2: die in Fig. 1 mit "∥" bezeichnete Befestigungsstelle einer Montageschiene,
- Fig. 3: eine Montageschiene im Querschnitt und
- Fig. 4: einen Schnitt durch eine Befestigungsstelle.

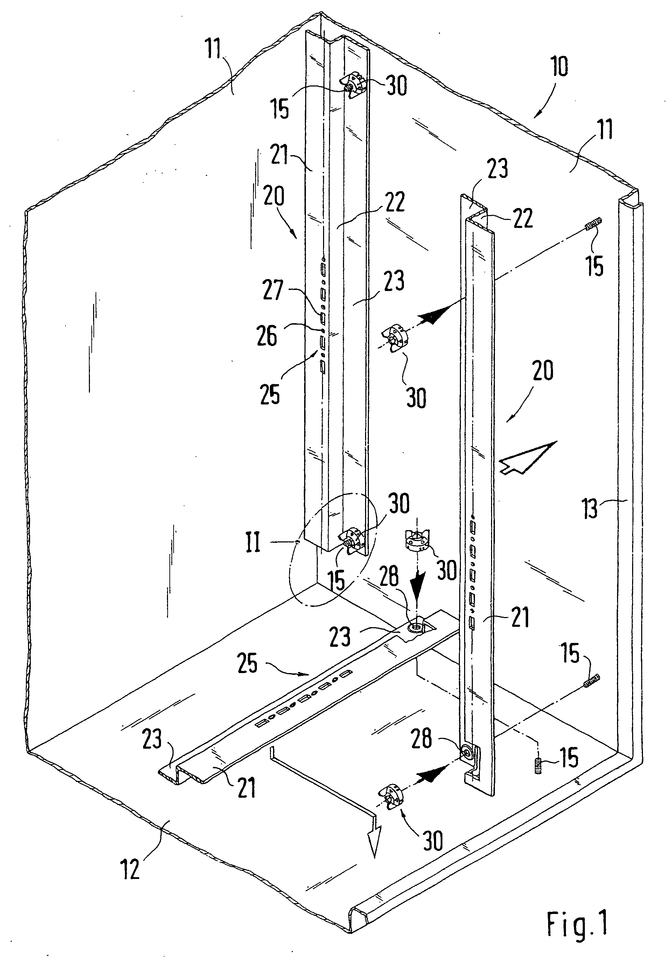

In Fig. 1 ist ein Teil eines Schrankkorpus 10 dargestellt, der aus drei vertikalen Seitenwänden 11 und zwei horizontalen Seitenwänden 12 gebildet ist. Im Bereich der offenen Frontseite des Schrankkorpus bilden Abkantungen 13 der Seitenwände 11 und 12 einen Frontrahmen, an dem eine Schranktüre angelenkt und verschlossen werden kann. Dabei erleichtern die Abkantungen 13 die Anbringung der Scharnier- und Schließelemente.

Die Montageschienen 20 können vertikal und horizontal ausgerichtet an den Innenseiten der Seitenwände 11 und 12 angeschraubt werden.

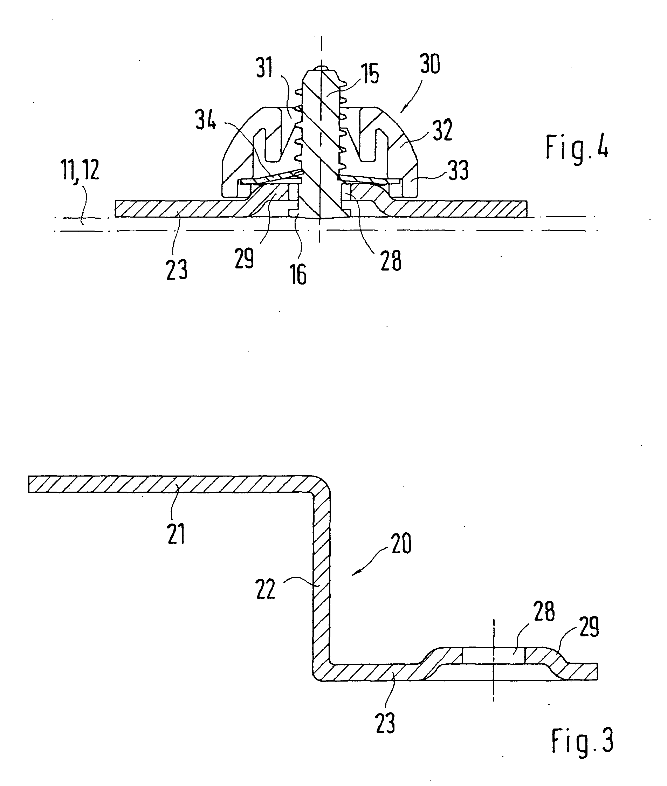

Wie die Fig. 3 zeigt, weist die Montageschiene 20 mit einem Montageschenkel 21, einem Abstandsschenkel 22 und einem Befestigungsschenkel 23 Z-förmigen Querschnitt auf. Der Montageschenkel 21 und der Befestigungsschenkel 23 verlaufen parallel und der Abstandsschenkel 22 steht senkrecht zu diesen Schenkeln. Zur Verschraubung weist der Befestigungsschenkel 23 mindestens zwei Befestigungsbohrungen 28 auf, die vorzugsweise den Endbereichen der Montageschiene 20 zugeordnet werden, wie der Fig. 1 zu entnehmen ist. Die Befestigungsbohrungen 28 sind von einer domartigen Ausprägung 29 umgeben, so dass sie von der Befestigungsfläche des Befestigungsschenkels 23 abgesetzt sind.

Eine Befestigungsstelle wird auf der Innenseite einer Seitenwand 11 oder 12 durch zwei beabstandet angebrachte Befestigungsschrauben 15 festgelegt. Der Abstand ist auf den Abstand der beiden Befestigungsbohrungen 28 des Befestigungsschenkels 23 der Montageschiene 20 abgestimmt. Die Montageschienen 20 werden auf die Befestigungsschrauben 15 aufgesteckt, die dabei durch die Befestigungsbohrungen 28 geführt werden. Die als Flügelmuttern ausgebildeten Muttern 30 vervollständigen die Schraubverbindungen, wenn diese auf den aus den Befestigungsbohrungen 28 ragenden Teile der Befestigungsschrauben 15 aufgeschraubt werden.

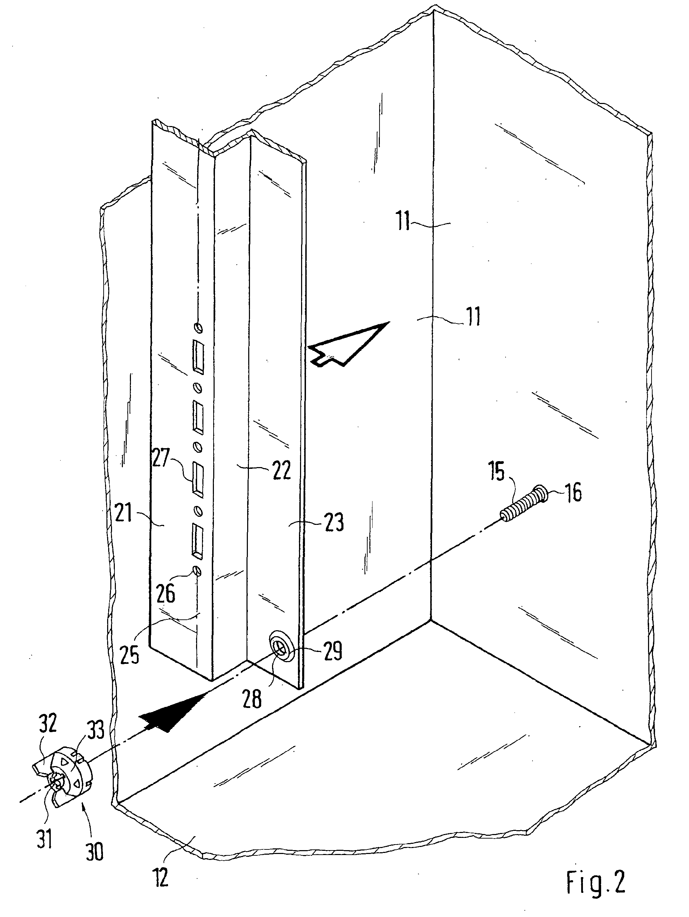

Wie der Schnitt nach Fig. 4 zeigt, wird vorher auf die Befestigungsschraube 15 eine Federscheibe 34 aufgesteckt, die für eine Verspannung der Schraubverbindung sorgt. Die Mutter 30 weist Flügel 32 auf, so dass sie manuell mit ihrer in die Federscheibe 34 eingebrachten Gewindeaufnahme 31 auf die Befestigungsschraube 15 mit ihrem Grobgewinde aufgeschraubt und festgezogen werden kann. Der dem Befestigungsschenkel 23 zugekehrte Teil der Mutter 30 ist als Abdeckung 33 ausgebildet, die die Ausprägung 29 um die Befestigungsbohrung 28 und damit die Befestigungsstelle abdeckt. Die Flügel 32 und die Abdeckung 33 der Mutter 30 sind in der vergrößerten Darstellung einer Befestigungsstelle nach Fig. 2 deutlich zu erkennen. Die Federscheibe 34 kann mit einer Verzahnung versehen sein. Diese gräbt sich beim Anziehen der Mutter 30 in die Oberfläche der Montageschiene 20 ein und sorgt für eine elektrische Kontaktierung. Damit kann die Montageschiene 20 mittels der Federscheibe 34 auf das gleiche elektrische Potential wie der Schrankkorpus 10 gelegt werden. Die Federscheibe 34 kann mit ihrer Gewindeaufnahme so ausgelegt sein, dass eine Schnellverschraubung möglich ist. Dementsprechend kann die Federscheibe 34 über das Grobgewinde der Befestigungsschraube 15 gerastert und anschließend mit einer Drehung über einen kurzen Drehweg fixiert werden.

Der Montageschenkel 21 der Montageschiene 20 weist mindestens eine Längsreihe 25 von Befestigungsaufnahmen in Rasterteilung auf, die sich in Befestigungsbohrungen 26 und rechteckförmigem Durchbruch 27 abwechseln. Die Befestigungsbohrungen 26 können, wie bekannt, für Schraubbefestigungen herkömmlicher Art verwendet werden, während die Durchbrüche 27 an sich bekannte Einklipsmuttern für Schraubverbindungen aufnehmen können. Die Rasterteilung der Befestigungsaufnahmen ist in Fig. 2 gezeigt.

Der Abstandsschenkel 22 der Montageschiene 20 hat eine Breite, die den Abstand des Montageschenkels 21 zur Innenseite der Seitenwand 11 oder 12 bestimmt.

## Patentansprüche

1. Vorrichtung zum Einbau von Montageschienen in den Innenraum eines Schaltschrankes, der mit vertikalen und horizontalen Seitenwänden bis auf die Frontseite verschlossen ist,
**dadurch gekennzeichnet,**
**dass** die Montageschienen (20) einen Montageschenkel (21), einen Abstandsschenkel (22) und einen Befestigungsschenkel (23) aufweisen,
**dass** die Montageschenkel (21) mit mindestens einer Längsreihe (25) von Befestigungsaufnahmen (26, 27) versehen sind,
**dass** die Befestigungsschenkel (23) zwei im Befestigungsabstand eingebrachte Befestigungsbohrungen (28) aufweisen,
**dass** die Befestigungsschienen (20) mit den Befestigungsschenkeln (23) und den Befestigungsbohrungen (28) an jeweils zwei im Befestigungsabstand auf der Innenseite der Seitenwände (11, 12) angebrachten Befestigungsschrauben (15) mit den Seitenwänden (11, 12) verschraubt sind, und
**dass** die Abstandsschenkel (22) den Abstand der Montageschenkel (21) zur Innenseite der Seitenwände (11, 12) festlegen.

2. Vorrichtung nach Anspruch 1,
**dadurch gekennzeichnet,**
**dass** die Längsreihen (25) abwechselnd als Bohrungen (26) und rechteckförmige Durchbrüche (27) ausgebildete Befestigungsaufnahmen aufweisen, die in gleichmäßigem Rasterabstand angeordnet sind.

3. Vorrichtung nach Anspruch 1 und 2,
**dadurch gekennzeichnet,**
**dass** der Montageschenkel (21) und der Befestigungsschenkel (23) parallel zueinander ausgerichtet und mit einem senkrecht dazu stehenden Abstandsschenkel (22) miteinander zur Montageschiene (20) verbunden sind.

4. Vorrichtung nach einem der Ansprüche 1 bis 3,
**dadurch gekennzeichnet,**
**dass** die Befestigungsbohrungen (28) im Befestigungsschenkel (23) der Montageschiene (20) mit einer domartigen Ausprägung (29) von der Befestigungsfläche des Befestigungsschenkels (23) abgesetzt sind und
**dass** eine auf das aus der Befestigungsbohrung (28) ragende Ende der Befestigungsschraube (15) aufgeschraubte Mutter (30) als manuell verstellbare Flügelmutter ausgebildet ist und mit einer Abdeckung (33) die Aussparung (29) um die Befestigungsbohrung (28) abdeckt.

5. Vorrichtung nach einem der Ansprüche 1 bis 4,
**dadurch gekennzeichnet,**
**dass** die Montageschienen (20) vertikal und/oder horizontal ausgerichtet an den Innenseiten der Seitenwände (11, 12) befestigt sind.

6. Vorrichtung nach einem der Ansprüche 1 bis 5,
**dadurch gekennzeichnet,**
**dass** die Befestigungsschrauben (15) mit einem Flachkopf (16) versehen sind, der an der Innenseite der Seitenwand (11, 12) angebracht ist.

7. Vorrichtung nach einem der Ansprüche 4 bis 6,
**dadurch gekennzeichnet,**
**dass** zwischen der Ausprägung (28) des Befestigungsschenkels (23) und der Mutter (30) auf der Befestigungsschraube (15) eine Federscheibe (34) angeordnet ist.

8. Vorrichtung nach einem der Ansprüche 1 bis 7,
**dadurch gekennzeichnet,**
**dass** zwei horizontale Seitenwände (12) und drei vertikale Seitenwände (11) einen boxartigen Schrankkorpus (10) bilden und
**dass** die Seitenwände (11, 12) an der offenen Frontseite mit Abkantungen (13) einen Frontrahmen zum Anlenken und Verschließen einer Schranktüre bilden.

9. Vorrichtung nach Anspruch 8,
**dadurch gekennzeichnet,**
**dass** die Schranktüre mittels Scharnier- und Schließelementen am Frontrahmen angebracht ist.
